**Europäisches Patentamt**

**European Patent Office**

**Office européen des brevets**

(11) Publication number: **0 105 987**
A2

# (12) EUROPEAN PATENT APPLICATION

(21) Application number: **82305440.8**

(22) Date of filing: **13.10.82**

(51) Int. Cl.³: **B 27 B 3/36**
// B23Q19/00

(43) Date of publication of application: **25.04.84**
**Bulletin 84/17**

(84) Designated Contracting States: **AT BE DE FR**

(71) Applicant: **DIGITAALI ELEKTRONIIKKA OY,**
**SF-40900 Säynätsalo (FI)**

(72) Inventor: **Hakkarainen, Jaakko M. A., Kontinpohja 13,**
**SF-40900 Säynätsalo (FI)**

(74) Representative: **Ford, Michael Frederick et al,**
**MEWBURN ELLIS & CO. 2/3 Cursitor Street, London**
**EC4A 1BQ (GB)**

(54) **A method for measuring the position of a frame-saw blade.**

(57) A method for orienting the blade of especially a frame saw, in which case the light from light transmitters (1) attached to the blade (5) is aimed at measuring scales (3, 4) on a measuring plane (2) in order to determine the orientation of the blade along three planes perpendicular to each other. Alternatively, the light from the light transmitters (1) can be reflected onto the measuring scale (3, 4) via mirrors (7) attached to the blade (5).

A method for measuring the position of a frame-saw blade

The present invention relates to a method for measuring the position of a saw blade, in particular a frame-saw blade, by using light for the measuring.

On the basis of, for example, CH Patent 275 525, it is known to use for determining the position of saw blades a spirit level and a graduated scale connected with it, by means of which the inclination of the blades, as seen from the side, can be set at the desired value. The use of accurate-measuring intermediate pieces which speed up re-positioning is known on the basis of, for example, FI Patent 51 440.

In an entirely different field of technology, namely in adjusting the inclination and toe-in of the front wheels of automobiles, it has already long been known to use light beams and directly readable scales as aids. For this purpose, the possibility of attaching a projector (DE Patent 1 673 848) or respectively a mirror (DE Patent 2 236 693) to the hub of the wheel has been suggested. In these cases, the arrangement in question has been highly appropriate for the reason that the wheels must be capable of being turned during the measuring.

The object of the invention is now to apply the use of light beams also to the measuring of the position of saw blades, in which case the blades can be oriented with great speed and certainty. In addition, the orientation is more accurate than before, and so re-orienting is not necessary and thereby extra stoppages are avoided.

The invention is characterized in that which is disclosed in the accompanying claims.

The invention is described in greater detail with reference to the accompanying drawings, in which
Figure 1 depicts the apparatus necessary for carrying out the method, and
Figure 2 depicts the apparatus for an alternative method.

It can be seen from the figures that the orienting is done by using light. The light is specifically laser, with sufficient intensity for producing the required clear measuring line or point. On the other hand, the apparatus can operate using even conventional sources of light, even though their use generally requires rather short measuring intervals.

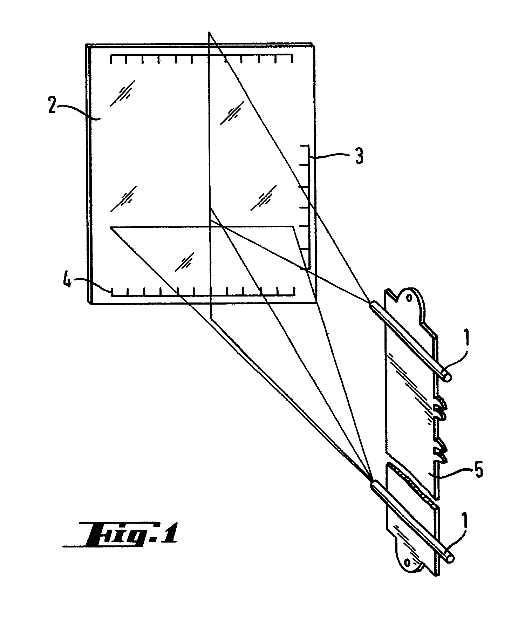

In Figure 1, the frame-saw blade to be oriented is indicated by numeral 5. Light transmitters 1, which are preferably laser transmitters, are attached to the blade by means of suitable holders or, for example, magnets. The lines of light transmitted by them are illustrated in the figure by means of lines departing from the transmitters and arriving at the measuring plane 2. In this specific embodiment there are two transmitters, of which the upper one transmits one line, which arrives at the measuring plane 2 in a vertical position, and the lower one transmits two lines, which intersect each other at a right angle and thus form a grid.

On the measuring plane there have been marked two graduated scales, which are used as an aid in orienting the blades 5. The scales have been precalibrated in such a way that if the line of light transmitted by a transmitter deviates from the values it should have, it is automatically known that adjustment is necessary. The scale 3 indicates the relative positions of the upper end and the lower end of the blade 5 in relation to each other, i.e. whether the upper end, respectively lower end, is further ahead in the cutting direction than the other end. At this time the horizontal line of the transmitter installed horizontally on the blade either rises or respectively lowers, if the upper end of the blade 5 is inclined in the travel direction, respectively the direction opposite to the travel direction. The scale 4 for its part is intended to illustrate the inclination of the blade in the direction perpendicular to the former direction. In other words, it can be used for checking whether, for example, the lower end of the blade has moved laterally from the cutting plane on which it should be. If moving has occurred, the boards to be sawn will not be of an even thickness, but one edge will be thicker than the other. In this case there is a difference between the readings on the scales on the measuring plane, the scales being in a horizontal position at the upper and lower edges of the plane. If, on the other hand, the readings deviate in the same direction and by an equal amount on both the upper and the lower scale, this means that the flat side of the blade 5 is not in the same direction in relation to the travel direction of the timber, but these directions are at an angle to each other. From this it follows that the blade 5 is subjected to very great torques and may for that reason be easily broken.

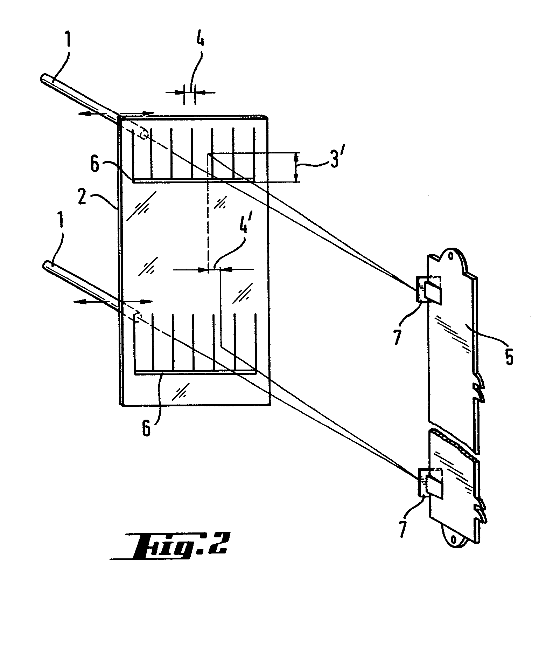

Figure 2 depicts an apparatus for carrying out an alternative method. In this embodiment, the transmitters are not attached to the blade 5, but mirrors 7 are attached to the blades, the mirrors being equipped with sufficiently long guides in order that the position be absolutely the same each time. The transmitters 1, on the other hand, are placed behind the measuring plane 2, from where they transmit their beams through slits 6 to the mirrors 7 and from their surfaces back onto the measuring plane. Reference numeral 3' indicates the inclination known from the previous embodiment. Thus there is inclination in the travel direction, respectively the direction opposite to the travel direction of the timber, if there is a vertical difference between the departing beam, i.e. slit 6, and the arriving beam, the difference being indicated by numeral 3' in the figure. The deviation from the center line, which is indicated by numeral 4', represents in this embodiment the same as the scale 4 in the previous embodiment, and the inclination can also be seen in the respective manner on the measuring plane 2. The transmitters 1 are movable in the lateral direction, from which it follows that a suitable slit 4' can be selected in advance, and thus the increase, respectively decrease, of the difference 4' can be observed in order to detect errors of orientation. Since the vertical difference 3 depends on the vertical position of the mirrors 7 on the blade, the difference 3' can also be adjusted to a suitable value by moving the mirrors in order to avoid a situation in which the arriving point would be at the slit 6. Thus the uncertainty factor which would otherwise exist if the point disappeared in the clearance 6 is eliminated.

Even though the use of only point-like light signals has been described above in connection with Embodiment 2, nothing prevents the use of a transmitter which transmits linear light even in this embodiment. In such a case, however, it is necessary to deviate to some extent from the apparatus structure presented, since also the vertical line of light should have its own slit in the measuring plane. When the second embodiment described above, employing mirrors 7, is used, the apparatus is about twice as accurate as the apparatus of the first embodiment. This is due to the fact that light travels a distance twice as long as in the first embodiment, provided that the measuring plane 2 is at an equal distance from the blade 5 as in the first embodiment.

The location of the measuring plane 2 is not very critical, for its distance from the blade can be, for example, between 5 and 30 m. Very great accuracy is not achieved using a plane at a distance shorter than five meters, and the use of a plane at a distance greater than 30 m sets high demands on the optics used. Thus, within the distance range mentioned above the apparatus is both sufficiently simple by structure and accurate.

Claims

1. A method for measuring the position of a saw blade, especially a frame-saw blade, by using light for the measuring, c h a r a c t e r i z e d  i n  that the beam of light of at least one light transmitter (1) attached to the blade (5) is aimed at  measuring scales (3, 4) on a measuring plane (2) situated at a distance from the blade, or the light beam of the transmitter (1) is reflected via at least one mirror (7) attached to the blade (5) onto the measuring scales (3, 4), in order to determine the blade orientation in at least two directions perpendicular to each other.

2. A method according to Claim 1, c h a r a c t e r i z e d  i n  that two transmitters (1), and in the case of reflection also two mirrors (7), are used.

3. A method according to Claim 1 or 2, c h a r a c t e r i z e d  i n  that the light used is laser.

4. A method according to any of the above claims, c h a r a c t e r i z e d  i n  that the transmitters (1) or mirrors (7) are attached to the blade (5) magnetically.

5. A method according to any of the above claims, c h a r a c t e r i z e d  i n  that the transmitters (1) transmit a point-like or linear light beam or a beam resembling a grid consisting of two lines perpendicular to each other, or a combination of these.

6. A method according to any of the above claims, c h a r a c t e r i z e d  i n  that the distance between the blade (5) and the measuring plane (2) is 5-30 m.

0105987

**Fig.1**

_Fig. 2_